(19) Europäisches Patentamt
European Patent Office
Office européen des brevets

(11) **EP 2 447 582 B1**

(12) **EUROPÄISCHE PATENTSCHRIFT**

(45) Veröffentlichungstag und Bekanntmachung des Hinweises auf die Patenterteilung:
**10.10.2012 Patentblatt 2012/41**

(21) Anmeldenummer: **10189423.6**

(22) Anmeldetag: **29.10.2010**

(51) Int Cl.:
**F16K 31/50** *(2006.01)*    **F16K 31/60** *(2006.01)*

(54) **Ventiloberteil einer Trinkwasserarmatur**

Valve top of a drinking water fitting

Partie supérieure de soupape d'une armature d'eau potable

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**02.05.2012 Patentblatt 2012/18**

(73) Patentinhaber: **Seppelfricke Armaturen GmbH 45881 Gelsenkirchen (DE)**

(72) Erfinder: **Heyka, Wilfried 45659 Recklinghausen (DE)**

(74) Vertreter: **Zenz Patent- und Rechtsanwälte Rüttenscheider Straße 2 45128 Essen (DE)**

(56) Entgegenhaltungen:
**EP-A1- 1 715 231      DE-A1- 1 803 446
DE-A1- 10 225 101      DE-C1- 19 705 982**

**Beschreibung**

Die Erfindung richtet sich auf ein Ventiloberteil einer Trinkwasserarmatur, mit einem Kopfstück, einem hohlzylinderförmigen Handgriff, der drehbar und axial fixiert mit dem Kopfstück verbunden ist und einen Aufnahmeraum aufweist, einem Stößel, von dem zumindest ein erster Längsabschnitt in einem Führungskanal des Kopfstücks in dessen Längsrichtung verschiebbar geführt ist und von dem ein zweiter Längsabschnitt aus dem Kopfstück in den Aufnahmeraum des hohlzylinderförmigen Handgriffs hervorsteht, und einem in Längsrichtung des Kopfstücks bewegbaren und mit dem Stößel verbundenen Ventilelement.

Ein derartiges Ventiloberteil wird bei einem Sitzventil für eine Absperrarmatur von beispielsweise wasserführenden Leitungen verwendet und weist den gesamten Bewegungsmechanismus für das Ventilelement auf. Bei einem solchen Ventiloberteil wird zwischen steigendem und nicht-steigendem Ventiloberteil unterschieden. Ein steigendes Ventiloberteil weist den Vorteil einer einfachen und kostengünstigen Konstruktion auf, wohingegen ein nicht-steigendes Ventiloberteil optisch ansprechender ist.

Aus der DE 1 803 446 A2 ist ein Ventil bekannt, welches ein Ventilgehäuse mit Anschlussstutzen für anzuschließende Leitungen und ein an einem Stößel befestigtes Ventilelement aufweist. Der Stößel ist in einer Führung in Achsrichtung längsverschiebbar, jedoch nicht drehbar. Eine Schraubenfeder ist koaxial zum Stößel angeordnet und wirkt in Schließrichtung des Ventilelements. Zur Umformung der Drehbewegung eines Handgriffs in eine Längsbewegung des Stößels weist das Ventil einen Kurventräger und einen Stift auf, wobei der Kurventräger auf einem Ansatz der Führung drehbar gelagert ist und der Handgriff mit dem Kurventräger drehfest verbunden ist. Der Stift ist axial fest mit dem Stößel verbunden und liegt mit jedem seiner Enden auf einer Kurvenbahn an. Dabei ist der Stift entweder in einer Offenstellung des Ventils oder in Schließlage des Ventils in entsprechenden Vertiefungen der Kurvenbahn angeordnet, wobei eine Bewegung des Stiftes in diesen Positionen blockiert ist.

Aus der DE 197 05 982 C1 ist ein Ventiloberteil mit einem Handgriff vom nicht-steigenden Typ bekannt. Bei Verstellung eines derartigen Ventiloberteils bewirkt der sich axial bewegende Ventilstößel bzw. Stößel keine Axialverschiebung des Handgriffs. Nicht-steigende Ventiloberteile haben den Vorteil, dass sich bei deren Betätigung infolge des nur drehenden Handgriffs die äußeren Raumverhältnisse nicht weiter verengen können und der Zugriff nicht zusätzlich eingeengt wird. Darüber hinaus weist das Ventiloberteil vom nicht-steigenden Typ den Vorteil einer konstant bleibenden und stellungsunabhängigen Bauhöhe auf, was das Ordnungsbild besonders beim Einbau mehrerer benachbarter Ventile mit solchen Oberteilen positiv beeinflusst. Zur Erzielung der nicht-steigenden Wirkungsweise ist im feststehenden hülsenförmigen Kopfstück eine drehbare, axial fixierte Hülse mit einem Innengewinde eingesetzt, innerhalb der ein axial verschiebbarer Stößel mit einer mehrkantigen Mantelfläche sitzt. Oben auf dem Stößel befindet sich ein damit drehfest verbundener Mitnehmerring, dessen Außengewinde mit dem Innengewinde der Hülse in Eingriff steht, wobei die Hülse fest mit dem Handgriff verbunden ist. Am unteren Ende des Stößels sind ein Ventilelement und eine Absperrdichtung angeordnet. Im Bereich des unteren Austritts des Stößels aus dem Kopfstück ist ein ringförmiges Führungselement mit zur Mantelfläche des Stößels formschlüssiger Innenkontur fest eingesetzt. Über das Führungselement sitzt im Kopfstück eine den Stößel radial umfassende Stößeldichtung, oberhalb der ein am unteren Hülsenende anliegender Haltering mit einer zur Mantelfläche des Stößels komplementären Innenkontur eingefügt ist.

Ein Ventiloberteil der Eingangs bezeichneten Art ist beispielsweise aus der DE 102 25 101 A1 bekannt und weist eine quasi nicht-steigende Wirkungsweise auf. In dem feststehenden hülsenförmigen Kopfstück ist ein Innengewinde vorgesehen, in dem ein etwa mittig entlang des Stößels liegender, relativ kurzer Außengewindeabschnitt geführt wird. Am oberen Stößelende befindet sich ein Zahnrad, während am unteren Stößelende der Ventilteller und die Absperrdichtung angeordnet sind. Im Bereich des unteren Austritts des Stößels aus dem Kopfstück ist ein Dichtungspaket mit O-Ringen und diese umgebende Scheiben eingesetzt. Über das Zahnrad ist ein Handgriff mit einem sich axial erstreckenden Aufnahmeraum gesteckt, der eine zum Zahnrad komplementäre Innenprofilierung aufweist. Abhängig von der Drehrichtung des Handgriffs, der über das Zahnrad den Stößel mitnimmt, ergibt sich durch die ineinander greifenden Gewinde an Stößel und Kopfstück eine axiale Verschiebung des Stößels. Adäquat zur Stößelverschiebung wandert das Zahnrad entlang der Innenprofilierung axial im Aufnahmeraum des Handgriffs. Im Prinzip ist dieses Oberteil von steigendem Typ. Da jedoch die Axialverschiebung des aus dem Kopfstück nach oben austretenden Stößels vom Handgriff verdeckt wird, der seine axiale Position beibehält, entsteht der Eindruck einer nicht-steigenden Wirkungsweise.

Nachteilig bei den aus dem Stand der Technik bekannten Ventiloberteilen ist der hohe erforderliche Aufwand zur Betätigung des Ventils. Die meist für Ventile mit schräger Sitzausführung verwendeten Ventiloberteile müssen große Sitztiefen über Drehbewegungen des Handgriffs zum Schließen und Öffnen überwinden. Um das Ventilelement entweder aus einer Schließposition in eine Öffnungsposition oder aus der Öffnungsposition in die Schließposition zu bewegen, sind zur Verstellung bei den bekannten Ventiloberteilen eine Vielzahl von Umdrehungen des Handgriffs erforderlich. Im Regelfall können beispielsweise für einen Schließvorgang acht Umdrehungen des Handgriffs notwendig sein. Somit ist ein schnelles Schließen und Öffnen des Ventilelements bei den bekannten Ventiloberteilen nur durch sehr schnelles und mehrmaliges Drehen des Handgriffs möglich.

Der Erfindung liegt daher die Aufgabe zugrunde eine Lösung zu schaffen, die auf konstruktiv einfache Weise und kostengünstig ein verbessertes Ventiloberteil für eine Trinkwasserarmatur bereitstellt, das zusätzlich zu bekannten Ausstattungsmerkmalen, wie beispielsweise Wartungsfreiheit, Betätigungsergonomie und Leichtgängigkeit, ein schnelles Schließen und Öffnen des Ventils mit geringem Betätigungsaufwand des Handgriffs ermöglicht.

Bei einem Ventiloberteil einer Trinkwasserarmatur der Eingangs bezeichneten Art wird diese Aufgabe erfindungsgemäß dadurch gelöst, dass ein ein Außengewinde aufweisendes Gewindeelement mit dem in den Aufnahmeraum des hohlzylinderförmigen Handgriffs hervorstehenden zweiten Längsabschnitt des Stößels drehfest verbunden ist, wobei das Außengewinde des Gewindeelements derart in ein komplementär und in der Innenwand des Handgriffs ausgebildetes Innengewinde eingreift, dass durch Drehung des Handgriffs das Ventilelement zwischen einer Öffnungsposition und einer Schließposition axial bewegbar ist.

Vorteilhafte und zweckmäßige Ausgestaltungen und Weiterbildungen der Erfindung ergeben sich aus den Unteransprüchen.

Durch die Erfindung wird eine Möglichkeit bereitgestellt, mit welcher auf konstruktiv einfache Weise ein verbessertes Ventiloberteil bereitgestellt wird, bei dem sich das Ventilelement zum Öffnen und Schließen mit geringem Betätigungsaufwand verstellen lässt. Der Handgriff ist hinsichtlich seines Durchmessers den ergonomischen Erfordernissen hinsichtlich seines Durchmessers zur händischen Manipulation angepasst. Dabei weist der dünnwandig ausgeführte Handgriff auf seiner Innenwand das Innengewinde auf, welches mit dem Außengewinde des drehfest mit dem Stößel verbundenen Gewindeelements in Eingriff steht. Im Unterschied zum Stand der Technik, bei dem üblicherweise eine Gewindeverbindung zwischen Kopfstück und Stößel vorhanden ist, ist die für die axiale Verschiebung des Stößels erforderliche Gewindeverbindung erfindungsgemäß im Handgriff angeordnet und zwischen der Innenwand des Handgriffs und dem zylinderförmigen Gewindeelement, dessen Außendurchmesser an den Innendurchmesser des dünnwandig ausgebildeten Handgriffs angepasst ist, verwirklicht. Dabei ist der Außendurchmesser des Gewindeelements wenigstens so groß wie der Außendurchmesser eines Anschlussgewindes, das nach Art eines Außengewindes an dem Kopfstück ausgebildet ist. Das Anschlussgewinde dient der Verbindung von Kopfstück mit einem Ventilgehäuse, in welchem das Ventiloberteil eingebaut wird. Somit weist folglich das Außengewinde des Gewindeelements auch einen größeren Außendurchmesser als der Stößel auf, so dass das Gewindeelement radial betrachtet über den maximalen Außendurchmesser des Stößels hinaus ragt. Dadurch ergibt sich im Vergleich zum bekannten Stand der Technik eine Gewindeverbindung mit größerem Durchmesser, wodurch folglich eine größere Hubbewegung des Stößels bei gleichbleibendem oder geringerem Betätigungsaufwand des Handgriffs realisiert ist. Der Gewindedurchmesser der erfindungsgemäß im Handgriff vorgesehenen Gewindeverbindung ist nur durch das noch mögliche Umgreifen mit der Hand eines Benutzers begrenzt und ermöglicht somit eine hohe Gewindesteigung pro Umdrehung des Handgriffs.

Im Hinblick auf eine kompakte Bauweise des Ventiloberteils bei gleichzeitig geringem Materialeinsatz ist in Ausgestaltung der Erfindung vorgesehen, dass das Gewindeelement zylinderförmig ausgebildet ist und die Axiallänge des Außengewindes des Gewindeelements höchstens eine Ganghöhe beträgt. Das Gewindeelement weist demnach lediglich einen nur einmal um den Umfang des Gewindeelements herum ausgebildeten Gewindescheitel bzw. Gewindegang auf. Diese Ausgestaltung ist ausreichend, um das Gewindeelement umfangsmäßig sicher und stabil im Innengewinde des Handgriffs zu führen, denn das Gewindeelement weist eine relativ große Mantelfläche im Vergleich zu der einmal um den Umfang des Gewindeelements verlaufenden, spiralförmigen Gewindeausgestaltung auf. Die relativ große Mantelfläche bewirkt, dass das Gewindeelement über die ebenfalls am Handgriff vorhandenen großen Gewindeflächen stabil geführt wird.

In weiterer Ausgestaltung der Erfindung ist es von Vorteil, wenn das Außengewinde des Gewindeelements einen Steigungswinkel von höchstens 5° aufweist. Für einen Steigungswinkel von mehr als 5° ist die selbsthemmende Eigenschaft der zwischen Gewindeelement und Handgriff ausgebildeten Gewindeverbindung nicht mehr gewährleistet.

Aufgrund dessen, dass das Außengewinde des Stößels mit dem in der Innenwand des Handgriffs ausgebildeten Innengewinde eine Gewindeverbindung eingeht, ist der Außendurchmesser des Gewindeelements und damit auch ein möglicher Außendurchmesser des Handgriffs durch eine vorgegebene Steigung bzw. Hubhöhe pro Handgriffumdrehung und einen vorgegebenen Steigungswinkel des Außengewindes des Gewindeelements bzw. des Innengewindes des Handgriffs festgelegt. Somit kann bei einem festgelegten Steigungswinkel $\alpha$, der aufgrund der Selbsthemmung nicht größer als 5° sein sollte, und einer vorgegebenen Steigung, die dem Hub des Stößels bei einer Umdrehung des Handgriffs entspricht, der Durchmesser d des Gewindeelements oder Handgriffs gemäß der nachstehenden Beziehung bestimmt werden:

$$d = \frac{\text{Steigung}}{\pi \cdot \tan \alpha}$$

Ferner ist in Weiterbildung der Erfindung vorgesehen, dass das Kopfstück ein Anschlussgewinde zur Verbindung an ein Ventilgehäuse aufweist, wobei der Außendurchmesser des Gewindeelements mindestens so groß ist wie der Außendurchmesser des Anschlussgewindes. Alternativ oder zusätzlich kann der Außendurchmesser des Gewindestücks zumindest doppelt so groß sein wie ein maximaler Außendurchmesser des Stößels. Damit ist ein schnelles Schließen und Öffnen des Ventilelements möglich. Gemäß der Alternative kann aber auch sichergestellt sein, dass der in das Medium eindringende Durchmesser des Stößels möglichst dünn ausgestaltet ist, was einen geringeren Kraftaufwand bei Verschiebung des Ventilelements erfordert.

Die Erfindung sieht in weiterer Ausgestaltung vor, dass bei einer Umdrehung des hohlzylinderförmigen Handgriffs die die Bewegung des Stößels in Längsrichtung des Kopfstücks kennzeichnende Steigung pro Umdrehung des Handgriffs in einem Bereich zwischen 8mm bis 16mm liegt, wobei die Steigung der Ganghöhe des Außengewindes des Gewindeelements bzw. des Stößelhubs pro Handgriffumdrehung entspricht. Damit ist sichergestellt, dass bei einer zum Schließen oder Öffnen des Ventilelements notwendigen Hubbewegung von beispielsweise etwa 24mm lediglich zwei bis maximal drei Umdrehungen des Handgriffs notwendig sind.

Eine relativ einfache Möglichkeit zur Einsparung von Materialkosten ist ferner in Ausgestaltung der Erfindung dadurch gegeben, dass der Gewindescheitel des Innengewindes des Handgriffs eine Auskehlung aufweist.

Um die Reibung und damit den Aufwand zur Verschiebung des Stößels zu reduzieren, ist erfindungsgemäß vorgesehen, dass ein Führungselement in eine in dem Stößel ausgeformte Umfangsnut in Bezug zu diesem axial fixiert eingebracht ist und zur Stabilisierung einer Verschiebung des Stößels in Längsrichtung des Kopfstücks an der Innenwand des Führungskanals des Kopfstücks anliegt. Gemäß dieser Ausgestaltung ist der in dem Führungskanal des Kopfstücks verschiebbare Längsabschnitt des Stößels mit einem geringeren Außendurchmesser ausgebildet als der Innenquerschnitt des Führungskanals. Dadurch ist sichergestellt, dass nur das Führungselement an der Innenwand des Führungskanals anliegt und auf dieser gleitet, so dass eine Reibung der Außenfläche des Stößels innerhalb des Führungskanals vermieden wird, wodurch sich ferner Verschleißerscheinungen verringert.

In weiterer Ausgestaltung der Erfindung ist ferner vorgesehen, dass der Führungskanal einen Anschlagsbereich aufweist, an dem das Führungselement in Öffnungsposition des Ventilelements anliegt. Das Zusammenwirken von Anschlagsbereich und Führungselement kann als eine sekundäre Sicherheitseinrichtung dienen, die eine über das erforderliche Maß hinausgehende Bewegung des Stößels beim Öffnen des Ventilelements vermeidet, indem der Anschlagsbereich die Verschiebebewegung des Stößels in Richtung der Öffnungsposition begrenzt.

Gemäß einer vorteilhaften Ausgestaltung der Erfindung ist an dem in den Aufnahmeraum des Handgriffs hervorstehenden zweiten Längsabschnitt des Stößels ein elastisches Federelement angebracht, das eine Bewegung des Gewindeelements in Längsrichtung des Stößels und relativ zum Stößel gegen eine von dem elastischen Federelement ausgeübte Kraft zulässt. In Schließposition des Ventilelements ist dadurch sichergestellt, dass die zum Schließen des Ventils notwendigen Bauteile des Ventiloberteils gegen Schwingungen, Vibrationen und Druckstöße, die unter ungünstigen Bedingungen oder Resonanzbedingungen zu einem Lösen der Schließelemente führen könnten, gesichert sind. Ferner wird durch das elastische Federelement die Dichtung des Ventilelements geschont.

In weiterer Ausgestaltung der Erfindung ist ferner vorgesehen, dass das elastische Federelement zwischen dem Gewindeelement und einem an dem in den Aufnahmeraum des Handgriffs hervorstehenden zweiten Längsabschnitt des Stößels fixierten Sicherungselement angeordnet ist, wobei in Schließposition des Ventilelements das Gewindeelement in Längsrichtung des Stößels und relativ zum Stößel in Richtung des Sicherungselements bewegt ist und dabei das elastische Federelement komprimiert bzw. zusammendrückt. Dadurch kann beispielsweise einer Veränderung des Festdrehmomentes aufgrund des Nachgebens von elastomeren Dichtscheiben ausgeglichen werden. Auch wird bereits bei geringen Festdrehmomenten eine dauerhaft sichere Schließfunktion des Ventiloberteils durch das elastische Federelement erreicht. Dabei kann durch den degressiven Verlauf der Federkraft über einen relativ langen und konstruktiv bestimmbaren Federweg die Schließkraft gehalten werden. Ferner können für die Sitzdichtung Dichtwerkstoffe, die zum Fließen neigen, verwendet werden, da die Schließkraft über den Federweg gehalten wird. Darüber hinaus werden Druckschläge infolge schneller Schließvorgänge durch das Federelement gemindert.

Um den Einbauraum des elastischen Federelements klein zu halten, ist es weiterhin von Vorteil, wenn das elastische Federelement zumindest eine Tellerfeder, vorzugsweise eine aus mehreren Tellerfedern bestehende Federsäule, ist. Dadurch ist es möglich, dass das Federelement auch bei kleinem Einbauraum sehr große Kräfte aufnehmen oder aufbringen kann. Als denkbare Alternativen zu einer Tellerfeder kann das elastische Federelement auch als eine oder mehrere Wellscheiben, als elastomere Scheibe, als Druckfeder oder als gewellter Ring ausgeführt sein.

In weiterer Ausgestaltung der Erfindung ist vorgesehen, dass das Gewindeelement eine in seinem Zentrum ausgebildete und in seiner Längsrichtung verlaufende, gestuft ausgebildete Durchgangsöffnung zur Aufnahme eines korrespondierend zu der gestuften Durchgangsöffnung ausgebildeten und aus dem Kopfstück in den Aufnahmeraum des hohlzylinderförmigen Handgriffs hervorstehenden freien Endes des zweiten Längsabschnitts des Stößels aufweist, wobei in Öffnungsposition des Ventilelements in der Durchgangsöffnung ein axialer Freiraum zwischen der Stufe der Durchgangsöffnung des Gewindeelements und dem korrespondierenden Abschnitt des Stößels vorhanden ist und in Schließposition des Ventilelements der korrespondierende Abschnitt des Stößels an der Stufe der Durchgangsöffnung des Gewindeelements anliegt. In Verbindung mit dem wie vorstehend beschriebenen elastischen Federelement wirkt das Federelement somit nur in Schließposition des Ventilelements.

Zur Reduzierung der Herstell- und Materialkosten ist es ferner von Vorteil, wenn der in seiner Längsrichtung zumindest abschnittsweise in dem Führungskanal des Kopfstücks verschiebbar geführte erste Längsabschnitt des Stößels im Querschnitt kreisförmig ausgebildet ist und wenn der aus dem Kopfstück in den Aufnahmeraum des hohlzylinderförmigen Handgriffs hervorstehende zweite Längsabschnitt des Stößels mit einer Außenkontur, beispielsweise nach Art eines Sechskants, versehen ist. Von weiterem Vorteil ist es dann, wenn der Außendurchmesser des ersten Längsabschnitts mit dem kreisförmigen Querschnitt kleiner ist als der kleinste Außendurchmesser des zweiten Längsabschnitts mit der Außenkontur. Im Hinblick auf den Herstellungsprozess eines solchen Stößels kann beispielsweise ein die gewünschte Außenkontur aufweisendes Stangenmaterial bezogen werden, so dass die Außenkontur nicht einzeln an jedem Stößel bei der Drehbearbeitung spanend und zeitaufwendig ausgeformt werden muss. Dementsprechend müsste das die gewünschte Außenkontur aufweisende Stangenmaterial lediglich durch einen Abdrehvorgang nachbearbeitet werden, um die gewünschte kreisförmige Querschnittsgestalt für den ersten Längsabschnitt herzustellen. Die Konsequenz dieses Vorgehens ist dann, dass der Durchmesser des kreisförmigen Querschnitts immer kleiner ist als der kleinste Durchmesser des Konturbereichs des Stößels.

Schließlich sieht die Erfindung in Weiterbildung vor, dass der Handgriff eine axiale Sichtöffnung aufweist, in die in Öffnungsposition des Ventilelements ein am Stößel angebrachtes Anzeigeelement eintritt. Dadurch kann auf konstruktiv einfache Weise angezeigt werden, ob sich das Ventilelement in der Öffnungsposition oder der Schließposition befindet.

Zusammenfassend wird durch die Erfindung ein Ventiloberteil bereitgestellt, welches im Vergleich zu aus dem Stand der Technik bekannten Ventiloberteilen durch eine Schnellschließ-Schnellöffnungs-Funktionalität gekennzeichnet ist.

Es versteht sich, dass die vorstehend genannten und nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen. Der Rahmen der Erfindung ist nur durch die Ansprüche definiert.

Weitere Einzelheiten, Merkmale und Vorteile des Gegenstandes der Erfindung ergeben sich aus der nachfolgenden Beschreibung im Zusammenhang mit der Zeichnung, in der beispielhaft ein bevorzugtes Ausführungsbeispiel der Erfindung dargestellt ist. In der Zeichnung zeigt:

Figur 1 ein erfindungsgemäßes Ventiloberteil in teilweiser Schnittansicht,
Figur 2 eine Einzelteildarstellung des Ventiloberteils aus Figur 1,
Figur 3 eine perspektivische Ansicht eines Stößels und eines Gewindeelements des Ventiloberteils,
Figur 4 eine Draufsicht auf den Stößel des Ventiloberteils,
Figur 5 den in Figur 4 gezeigten Stößel des Ventiloberteils in zum Teil geschnittener Ansicht,
Figur 6 das Gewindeelement in perspektivischer Ansicht und in einer seitlichen Schnittansicht,
Figur 7 ein Kopfstück des Ventiloberteils in perspektivischer Ansicht,
Figur 8 eine perspektivische Ansicht des in das Kopfstück eingesetzten Stößels, der mit dem Gewindeelement in drehfestem Eingriff steht,
Figur 9 das in einem Ventilgehäuse eingebaute Ventiloberteil in Öffnungsposition und
Figur 10 das in das Ventilgehäuse eingebaute Ventiloberteil in Schließposition.

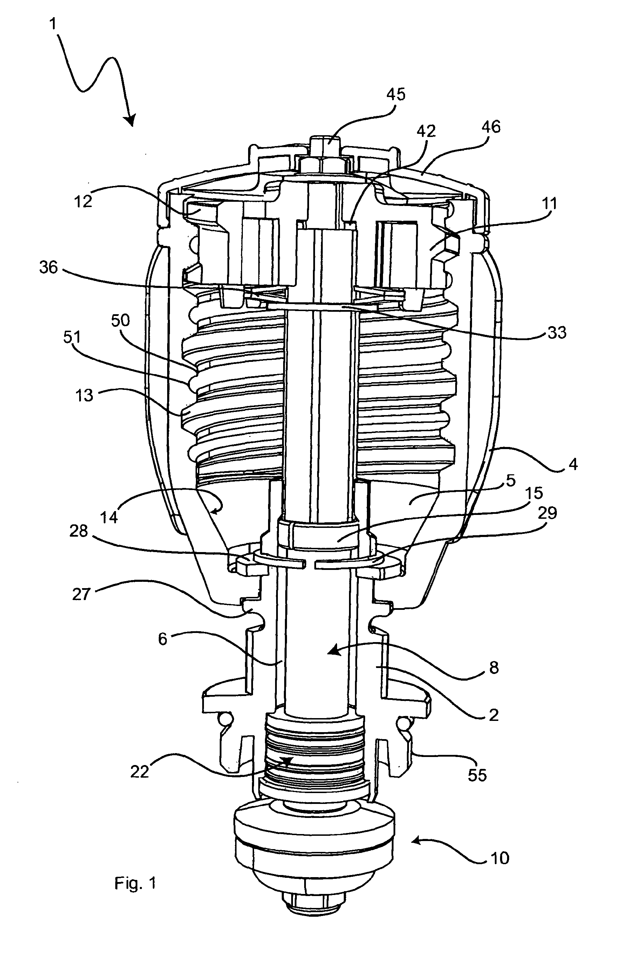

Nachstehend wird das erfindungsgemäße Ventiloberteil mit Bezug auf die Figuren 1 bis 10 detailliert beschrieben. Das in seiner Gesamtheit mit dem Bezugszeichen 1 versehene Ventiloberteil kann bei Sitzventilen in Absperrarmaturen, wie beispielsweise eine Trinkwasserarmatur, in Schrägsitz- und Geradsitzausführung in wasserführenden Leitungen verwendet werden.

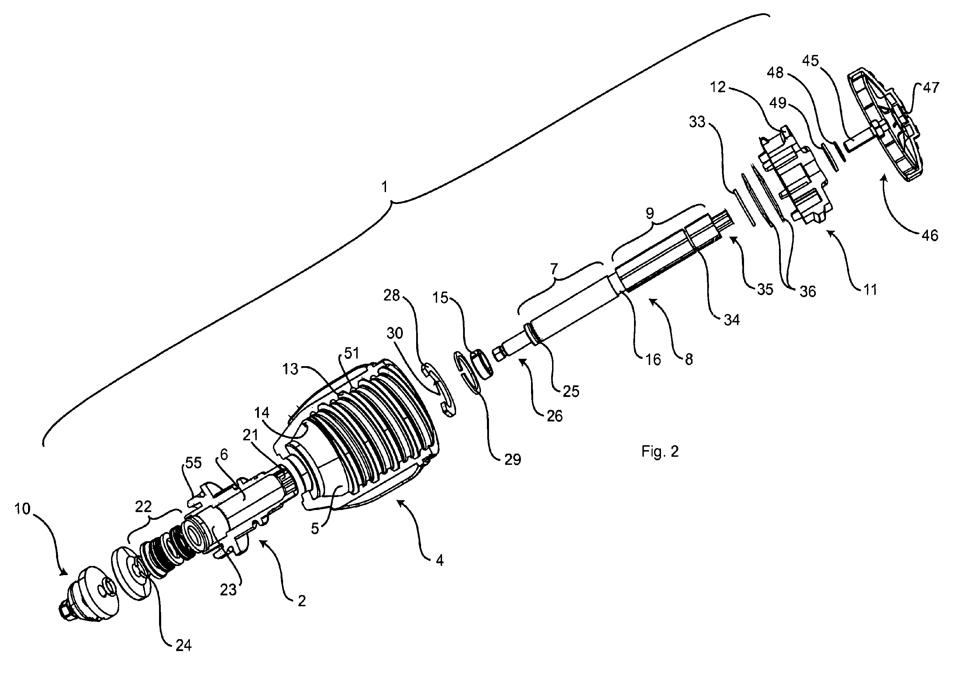

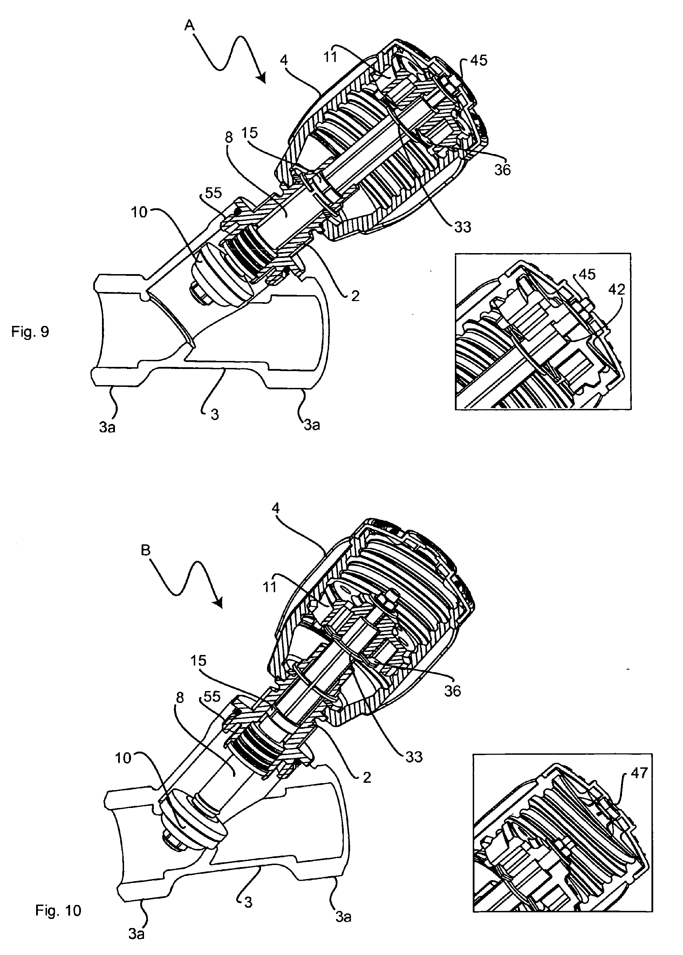

Das Ventiloberteil 1 ist in Figur 1 in seinem zusammengebauten Zustand in teilweiser Schnittansicht und in Figur 2 in einer Ansicht der einzelnen Bauteile dargestellt. Das Ventiloberteil 1 umfasst ein hülsenförmig ausgebildetes Kopfstück 2, das mit einem in den Figuren 9 und 10 dargestellten Ventilgehäuse 3 in fluiddichten Eingriff bringbar ist. Das Kopfstück 2 ist somit in Bezug auf das Ventilgehäuse 3 feststehend angeordnet. Die beiden Längsenden 3a des Ventilgehäuses 3 weisen Anschlussmöglichkeiten für eine Fluidleitung auf. Ferner umfasst das Ventiloberteil 1 einen Handgriff 4, der hohlzylinderförmig ausgebildet ist, so dass das Innere des Handgriffs 4 einen Hohlraum bzw. Aufnahmeraum 5 bildet. Der Handgriff 4 ist drehbar, aber axial fixiert mit dem Kopfstück 2 verbunden. Das feststehende bzw. fest auf dem Ventilgehäuse 3 sitzende Kopfstück 2 weist einen Führungskanal 6 auf, in welchem ein erster Längsabschnitt 7 eines Stößels 8 in Längsrichtung des Kopfstücks 2 verschiebbar geführt ist. Ein zweiter Längsabschnitt 9 des Stößels 8 steht im zusammengebauten Zustand des Ventiloberteils 1 in den Aufnahmeraum 5 des hohlzylinderförmigen Handgriffs 4 hervor. Am freien Ende 26 des ersten Längsabschnitts 7 des Stößels 8 ist ein Ventilelement 10 angebracht, dass zusammen mit dem Stößel 8 in Längsrichtung des Kopfstücks 2 bewegbar bzw. verschiebbar ist. Am freien Ende 35 des zweiten Längsabschnitts 9 des Stößels 8 ist ein zylinderförmiges Gewindeelement 11 mit einem Außengewinde 12 angebracht. Das Gewindeelement 11 ist im zusammengebauten Zustand des Ventiloberteils 1 im Aufnahmeraum 5 des Handgriffs 4 angeordnet und drehfest mit dem zweiten Längsabschnitt 9 des Stößels 8 verbunden. Dabei steht das Außengewinde 12 des Gewindeelements 11 in Eingriff mit einem Innengewinde 13, das komplementär zu dem Außengewinde 12 des Gewindeelements 11 in der Innenwand 14 des Handgriffs 4 ausgebildet ist. Der Gewindescheitel 50 des Innengewindes 13 des Handgriffs 4 weist eine umlaufende Auskehlung 51 auf, wodurch Material eingespart wird. Ferner steht das Gewindeelement 11 mit dem Handgriff 4 derart in Wirkverbindung, dass durch Drehung des Handgriffs 4 das Ventilelement 10 zwischen einer Öffnungsposition A (siehe Figur 9) und einer Schließposition B (siehe Figur 10) axial bzw. in Längsrichtung des Kopfstücks 2 bewegbar ist.

Ausgehend von der in Figur 2 gezeigten Darstellung der einzelnen Bauteile des Ventiloberteils 1 wird nachstehend der Zusammenbau bzw. die Montage und das Zusammenwirken der einzelnen Bauteile des Ventiloberteils 1 beschrieben. Zu Beginn der Montage wird ein ringförmiges Führungselement 15 über den ersten Längsabschnitt 7 des Stößels 8 geschoben und in eine in dem Stößel 8 ausgeformte Umfangsnut 16 fixiert eingebracht. Die in aus den Figuren 2, 4 und 5 ersichtliche Umfangsnut 16 unterteilt den Stößel 6 in etwa in der Mitte seiner Längserstreckung in den ersten Längsabschnitt 7, der im Querschnitt kreisförmig ausgebildet ist, und in den zweiten Längsabschnitt 9, der mit einer Außenkontur 40 nach Art eines Sechskants bzw. mit einer mehrkantigen Mantelfläche versehen ist.

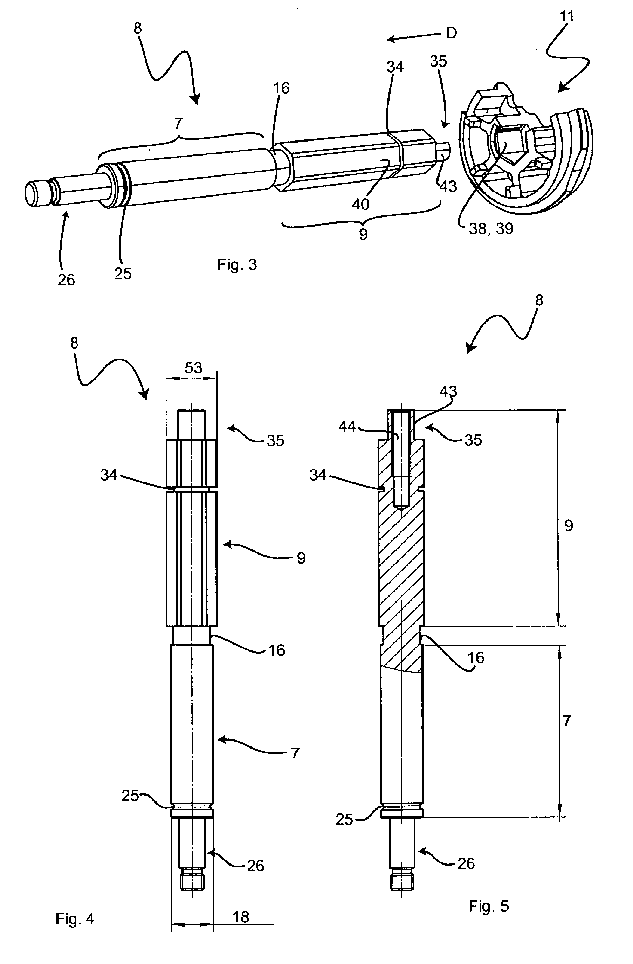

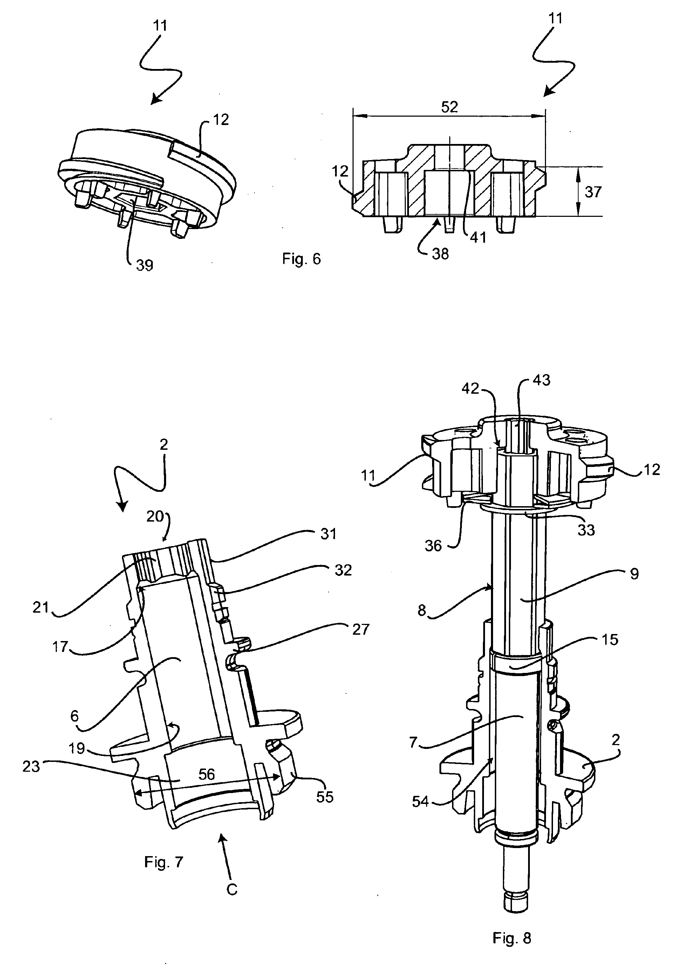

Nachdem das Führungselement 15 in die Umfangsnut 16 des Stößels 8 eingebracht ist, wird der Stößel 8 mit seinem zweiten Längsabschnitt 9 in Richtung des in Figur 7 dargestellten Pfeils C, also in der Darstellung von Figur 7 von unten, in den Führungskanal 6 des Kopfstücks 2 eingeschoben. Zu Beginn des Einschiebens wird der zweite Längsabschnitt 9, der mit der sechskantförmigen Außenkontur 40 versehen ist, durch eine Öffnung 20 des Kopfstücks 2 geführt, die eine passgenau und korrespondierend zu der Außenkontur 40 des zweiten Längsabschnitts 9 ausgebildete Innenkontur 21 in Form eines Sechskants aufweist. Der Stößel 8 wird soweit in den Führungskanal 6 des Kopfstücks 2 eingeschoben, bis das an dem Stößel 8 fixierte Führungselement 15 an einem im Führungskanal 6 ausgebildeten Anschlagsbereich 17 des Kopfstücks 2 anliegt. In dieser Stellung befindet sich der Stößel 8 in der Öffnungsposition A des Ventilelements 10 und eine weitere Verschiebung des Stößels 2 nach oben in Richtung des Handgriffs 4 ist nicht möglich. Somit steht immer ein mit der sechskant-förmigen Außenkontur 40 ausgebildeter Bereich des zweiten Längsabschnitts 9 des Stößels 8 mit leichtem Spiel in Eingriff mit dem Kopfstück 2, so dass der Stößel 8 zwar drehfest, aber dennoch in Längsrichtung des Kopfstücks 2 verschiebbar mit dem Kopfstück 2 gekoppelt ist. Ferner ist der Innendurchmesser des Führungskanals 6 des Kopfstücks 2 größer ausgeführt als der Außendurchmesser 18 des ersten Längsabschnitts 7 des Stößels 8 (siehe Figur 4), so dass bei einer Verschiebung des ersten Längsabschnitts 7 innerhalb des Führungskanals 6 nur das in der Umfangsnut 16 sitzende Führungselement 15, jedoch nicht die zylinderförmige Außenfläche des ersten Längsabschnitts 7 des Stößels 8 in Kontakt mit der Innenwand 19 des Führungskanals 6 (siehe Figur 7) steht. Es existiert folglich zwischen der Innenwand 19 des Führungskanals 6 und der Außenfläche des ersten Längsabschnitts 7 des Stößels 8 ein gewisser Spalt bzw. Freiraum 54, wie aus Figur 8 ersichtlich ist. Das ringförmig ausgebildete Führungselement 15 führt und stabilisiert folglich die Verschiebebewegung des Stößels 8 innerhalb des Kopfstücks 2, wobei der Stößel 8 drehfest und in Längsrichtung des Kopfstücks 2 verschiebbar mit diesem gekoppelt ist. Als Material für das Führungselement 15 kann beispielsweise Polyoxymethylen (POM) verwendet werden, welches eine hohe Steifigkeit in einem weiten Temperaturbereich und niedrige Reibungswerte aufweist.

Im weiteren Verlauf der Montage des erfindungsgemäßen Ventiloberteils 1 wird dann ein aus mehreren Dichtringen bestehendes Dichtungspaket 22 in Richtung des in Figur 7 gezeigten Pfeils C in eine an den Führungskanal 6 angrenzende Dichtungskammer 23 des Kopfstücks 2 eingepresst. Das Dichtungspaket 22 verschließt das Ventiloberteil 1 fluiddicht und ermöglicht dennoch eine Bewegung des Stößels 8 in Längsrichtung des Kopfstücks 2 durch das Dichtungspaket 22 hindurch. Nachdem das Dichtungspaket 22 in die in dem Kopfstück 2 ausgebildete Dichtungskammer 23 eingebracht ist, wird dann ein Sprengring 24 zur formschlüssigen und axialen Sicherung in Richtung des in Figur 7 dargestellten Pfeils C auf den Stößel 8 in eine im ersten Längsabschnitt 7 des Stößels 8 ausgeformte Umfangsnut 25 montiert.

Im Anschluss an diesen Zusammenbauschritt wird dann an dem freien Ende 26 des ersten Längsabschnitts 7 des Stößels 8 das Ventilelement 10 angebracht. Damit ist der Zusammenbau des unteren und mit dem Ventilgehäuse 3 verbundenen Bereichs des Ventiloberteils 1 bzw. Kopfstücks 2 fertig gestellt.

Im weiteren Verlauf des Zusammenbaus des Ventiloberteils 1 wird dann der Handgriff 4 mit seinem Aufnahmeraum 5 über das obere und die Öffnung 20 aufweisende Ende des Kopfstücks 2 bis zu einem auf der Außenwand des Kopfstücks 2 ausgebildeten Abstützansatz 27 aufgeschoben. Die axiale Fixierung und drehbare Sicherung des Handgriffs 4 an dem Kopfstück 2 erfolgt dabei mit Hilfe einer Scheibe 28 und eines die Scheibe 28 an dem Kopfstück 2 axial fixierenden Sicherungsringes 29. Die Scheibe 28 weist eine zweikant-förmige Innenkontur 30 auf, die korrespondierend zu einer zweikant-förmigen Außenkontur 31 des Kopfstücks 2 ausgebildet ist. Der Sicherungsring 29 wird bei Montage unterhalb eines an dem Kopfstück 2 ausgebildeten Sicherungsansatzes 32 angebracht. Auf diese Weise ist der Handgriff 4 axial an dem Kopfstück 2 gesichert, wobei dennoch die Drehbarkeit des Handgriffs 4 gewährleistet ist.

Nach Anbringung des Handgriffs 4 an dem Kopfstück 2 wird ein radialer Sicherungsring 33 in eine an dem zweiten Längsabschnitt 9 des Stößels 8 ausgebildete Umfangsnut 34 eingefügt. Die Montage des radialen Sicherungsrings 33 erfolgt hierbei durch eine obere Öffnung des Handgriffs 4, wobei der Sicherungsring 33 über das freie Ende 35 des zweiten Längsabschnitts 9 des Stößels 8 in Richtung des in Figur 3 dargestellten Pfeils D geschoben wird. Nach Anbringung des radialen Sicherungsringes 33 wird ebenfalls in Richtung des in Figur 3 dargestellten Pfeils D ein elastisches Federelement 36 in Form von zwei Tellerfedern über den zweiten Längsabschnitt 9 des Stößels 8 geschoben, bis das elastische Federelement 36 auf dem radialen Sicherungsring 33 aufliegt.

In einem weiteren Zusammenbauschritt wird daraufhin das zylinderförmig ausgebildete Gewindeelement 11 zunächst in die obere Öffnung des Handgriffs 4 eingeschraubt, bevor das Gewindeelement 11 mit dem Stößel 8 zusammengefügt wird. Das Außengewinde 12 des Gewindeelements 11 beträgt in dem dargestellten Ausführungsbeispiel eine einzige Ganghöhe 37, d.h. der Scheitel des Außengewindes 12 verläuft genau nur einmal um den Außenumfang des Gewindeelements 11. Denkbar wären aber auch Ausgestaltungen mit einem mehrmals umlaufenden Gewindegang oder einer leicht kleineren Ganghöhe. Der Steigungswinkel des Außengewindes 12 des Gewindeelements 11 beträgt in dem dargestellten Ausführungsbeispiel 4,5°, wobei ein maximaler Steigungswinkel von 5° möglich ist. Bei Wahl eines größeren Steigungswinkels wäre jedoch die Selbsthemmung der Gewindeverbindung von Gewindeelement 11 und Handgriff 4 nicht mehr gewährleistet, so dass höchstens ein Steigungswinkel von 5° für die Gewindeverbindung in Betracht gezogen werden sollte.

Das Gewindeelement 11 weist eine in Figur 6 näher dargestellte und gestuft ausgebildete Durchgangsöffnung 38 auf, wobei der den größeren Innendurchmesser aufweisende Abschnitt der Durchgangsöffnung 38 mit einer sechskant-förmigen Innenkontur 39 versehen ist. Nach dem Einschrauben des Gewindeelements 11 in den Handgriff 4 erfolgt wie vorstehend erwähnt das Zusammenfügen von Gewindeelement 11 und Stößel 8. Beim Zusammenfügen wird die Innenkontur 39 des Gewindeelements 11 mit der korrespondierend ausgebildeten sechskant-förmigen Außenkontur 40 des zweiten Längsabschnitts 9 des Stößels 8 (siehe Figur 3) in Eingriff gebracht, d.h. ein Teil des zweiten Längsabschnitts 9 des Stößels 8 wird in den Abschnitt der gestuft ausgebildeten und die Innenkontur 39 aufweisenden Durchgangsöffnung 38 mit eingebracht, so dass ein Abschnitt des sechskant-förmigen Stößels 8 mit der sechskant-förmigen Innenkontur 39 der Durchgangsöffnung 38 zusammengefügt wird. Das freie Ende 35 des zweiten Längsabschnitts 9 des Stößels 8 ragt dabei in den den kleineren Durchmesser aufweisenden Abschnitt der Durchgangsöffnung 38 hinein. Auf diese Weise ist der Stößel 8 drehfest mit dem Gewindeelement 11 verbunden. Bei der Montage wird jedoch der die mehrkantige Außenkontur 40 aufweisende zweite Längsabschnitt 9 des Stößels 8 nicht bis zum Anliegen an die Stufe 41 der Durchgangsöffnung 38 eingeführt, sondern es verbleibt ein axialer Freiraum 42. Die Bedeutung des axialen Freiraumes 42 wird nachstehend noch näher erläutert.

Wie vorstehend ausgeführt, ist nach dem Einschrauben des Gewindeelements 11 in den Handgriff 4 ein am freien Längsende 35 des zweiten Längsabschnitts 9 des Stößels 8 ausgebildeter Zapfen 43 in dem den kleineren Durchmesser aufweisenden Teil der Durchgangsöffnung 38 des Gewindeelements 11 angeordnet. Der Stößel 8 weist an dem freien Ende 35 eine Bohrung 44 auf, die sich durch den Abschnitt des Zapfens 43 bis zum zweiten Längsabschnitt 9 des Stößels 11 axial erstreckt und der Aufnahme eines mit einem Außengewinde versehenen Anzeigeelements 45 dient. Mit Hilfe des nach Art einer Schraube ausgeführten Anzeigeelements 45 wird dann das Gewindeelement 11 an dem Stößel 8 in Form einer bekannten Schraubverbindung axial gesichert, wobei üblicherweise Scheibenelemente 48 und 49 zwischen dem Kopf des Anzeigeelements 45 und dem Gewindeelement 11 angeordnet sind.

Zum Abschluss des Zusammenbaus des Ventiloberteils 1 wird dann ein dem Handgriff 4 zugeordneter Deckel 46 auf das obere Längsende des Handgriffs 4 aufgedrückt, der eine Sichtöffnung 47 aufweist, in die in Öffnungsposition A des Ventilelements 10 das am Stößel 8 angebrachte Anzeigeelement 45 eintritt.

Die in Figur 9 dargestellte Stellung von Ventilelement 10, Stößel 8 und Gewindeelement 11 entspricht der Öffnungsposition A, in welcher ein Durchfluss eines Fluids durch das Ventilgehäuse 3 gestattet ist. In der Öffnungsposition A befindet sich der Stößel 8 in seiner in Bezug auf das Ventilgehäuse 3 obersten Position, in welcher das ringförmige Führungselement 15 an dem Anschlagsbereich 17 des Kopfstücks 2 anliegt. Ferner ist das Anzeigeelement 45 für einen Benutzer wahrnehmbar in der Sichtöffnung positioniert und kennzeichnet die Öffnungsposition A des Ventilelements 10. In dieser Stellung des Ventiloberteils 1 ist zwischen dem Stößel 8 und dem Gewindeelement 11 der axiale Freiraum 42 vorhanden.

Um das Ventilelement 10 aus der Öffnungsposition A in die in Figur 10 dargestellte Schließposition B zu bewegen, wird der Handgriff 4 entsprechend gedreht. Aufgrund dessen, dass der Stößel 8 drehfest mit dem Kopfstück 2 und dem Gewindeelement 11 gekoppelt ist und dass das Innengewinde 13 des Handgriffs 4 in Gewindeverbindung mit dem Außengewinde 12 des Gewindeelements 11 steht, führt eine entsprechende Drehung des Handgriffs 4 dazu, dass lediglich eine Bewegung des Gewindeelements 11 und des damit drehfest verbundenen Stößels 9 in axialer Richtung bzw. in Längsrichtung des Kopfstücks 2 möglich ist. Das Gewindeelement 11 und damit der Stößel 8 werden in Richtung des Kopfstücks 2 bewegt, bis das Ventilelement 10 auf einem entsprechenden Ventilsitz zum Aufliegen kommt und der Durchfluss durch das Ventilgehäuse 3 versperrt ist. Bei der Verschiebebewegung wird der erste Längsabschnitt 7 des Stößels 8 mittels des Führungselements 15 stabilisierend und ohne Kontakt mit der Innenwand 19 des Führungskanals 6 in diesem geführt. Ferner wird bei der Verschiebebewegung in Richtung der Schließposition B das elastische Federelement 36 zusammengedrückt, wie insbesondere der vergrößerten Ansicht in Figur 10 zu entnehmen ist, wobei ein korrespondierend zu der Stufe 41 ausgebildeter Abschnitt des Stößels 8 an der Stufe 41 der Durchgangsöffnung 41 des Gewindeelements 11 in der Schließposition B anliegt. Hierbei lässt das Federelement 36 eine Bewegung des Gewindeelements 11 in Längsrichtung des Stößels 8 und relativ zum Stößel 8 gegen eine von dem elastischen Federelement 36 ausgeübte Kraft zu. Die Axiallänge des axialen Freiraums 42 entspricht dabei einem Relativhub des Stößels 8 in der letzten Schließphase des Ventilelements 10.

Wichtig für die Funktionalität eines schnell zu schließenden und schnell zu öffnenden Ventils bzw. Ventilelements 10 ist die im Inneren des Handgriffs 4 angeordnete und ausgebildete Gewindeverbindung zwischen Handgriff 4 und Gewindeelement 11. Die radiale Ausdehnung des Handgriffs 4 ist nur durch ergonomische Erwägungen eingeschränkt, bei der das Umgreifen des Handgriffs 4 von einem Benutzer sichergestellt sein muss. Zweckmäßigerweise ist hierzu der Außendurchmesser 52 des Gewindeelements 11 (siehe Figur 6) mindestens so groß wie der Außendurchmesser 56 eines außen am Kopfstück 2 ausgebildeten Anschlussgewindes 55 (siehe Figur 7). Das Anschlussgewinde 56 dient zur Verbindung des Kopfstücks 2 mit dem Ventilgehäuse 3, welches ein entsprechendes Innengewinde aufweist, das mit dem Anschlussgewinde 55 des Kopfstücks 2 in Eingriff bringbar ist. Zwangsläufig ist daher der Außendurchmesser 52 wenigstens, vorzugsweise doppelt, so groß wie ein maximaler Außendurchmesser 53 des Stößels 8 (siehe Figur 4). Der Außendurchmesser 52 des Gewindeelements 11 ist durch eine vorgegebene Steigung und einen vorgegebenen Steigungswinkel $\alpha$ seines Außengewindes 12 festgelegt und lässt sich nach folgender Beziehung bestimmen:

$$d = \frac{\text{Steigung}}{\pi \cdot \tan \alpha}$$

Der maximale Steigungswinkel $\alpha$ ist hierbei aufgrund des Erfordernisses der Selbsthemmung der vorstehend genannten Gewindeverbindung mit maximal 5° gegeben. Bei einer vorgegebenen Steigung, die die Bewegung des Stößels 8 in Längsrichtung des Kopfstücks 2 kennzeichnet und in einem Bereich zwischen 8mm bis 16mm liegen kann, ergibt sich dann ein Durchmesser von ca. 29mm bzw. ca. 58mm für das Außengewinde 12 des Gewindeelements 11, so dass der dünnwandige Handgriff 4 nur einen unwesentlich davon größeren Durchmesser aufweist. Für eine Steigung bzw. einen Hub des Stößels 8 von 12mm pro Umdrehung des Handgriffs 4 weist dieser in etwa einen Durchmesser von 44mm auf, so dass bei zwei Umdrehungen des Handgriffs 4 der Stößel 8 einen axialen Weg von 24mm zurücklegt, um entweder aus der Öffnungsposition A in die Schließposition B oder umgekehrt aus der Schließposition B in die Öffnungsposition A zu gelangen.

Aufgrund der erfindungsgemäßen Gewindeverbindung zwischen Handgriff 4 und Gewindeelement 11 mit großem Durchmesser sind im Vergleich zum Stand der Technik große Steigungsraten möglich. Bei den bekannten Ventiloberteilen erfolgte in Schließposition ein weiches Festdrehen durch Komprimierung der Dichtung, was als weicher Schraubfall bezeichnet wird. Mit Hilfe des Federelements 36 wird bei der vorliegenden Erfindung ebenso ein weicher Schraubfall erzeugt, wobei darüber hinaus weitere Vorteile entstehen. Das elastische Federelement 36 sorgt für einen Ausgleich von Ausdehnungskoeffizienten unterschiedlicher Werkstoffe, die zu Veränderungen des Festdrehmoments des Ventiloberteils in seiner Schließfunktion führen können. Auch sorgt das Federelement 36 für einen Ausgleich von Veränderungen des Festdrehmoments durch Nachgeben der elastomeren Dichtscheiben. Ferner sichert das Federelement 36 die schließenden Bauteile des Ventiloberteils 1 gegen Schwingungen, Vibrationen und Druckstöße, die unter ungünstigen Randbedingungen oder Resonanzerscheinungen zu einem Lösen der Schließelemente führen können. Darüber hinaus kann das Federelement 36 technisch genau auf einen Bedarfsfall zugeschnitten bzw. ausgelegt werden. Bereits bei einem geringen Festdrehmoment wird eine dauerhaft sichere Schließfunktion des Oberteils durch das Federelement 36 erreicht. Durch einen degressiven Federkraftverlauf, d.h. die Gegenkraft des Federelements 36 nimmt mit steigender Komprimierung ab, kann über einen relativ langen, konstruktiv bestimmbaren Federweg die Schließkraft gehalten werden. Auch können mit Hilfe des Federelements 36 Dichtwerkstoffe für die Sitzdichtung verwendet werden, die zum Fließen neigen, weil die Schließkraft über den Federweg gehalten wird. Auch Druckschläge durch schnelle Schließvorgänge werden schließlich durch das Federelement 36 gemindert.

Durch die vorstehend beschriebene Erfindung wird ein Ventiloberteil mit einer funktionalen Kombination eines im Durchmesser großen Innengewindes eines Handgriffs, dessen radiale Ausdehnung nur durch das noch mögliche Umgreifen mit der Hand begrenzt und somit eine hohe Gewindesteigung erlaubt, mit einem mitbewegten Federelement, welches in der Schließphase und Schließposition des Ventilelements wirkt, bereitgestellt. Das Federelement ist mit dem Handgriff über das Gewindeelement derart gekoppelt, dass es bei unterschiedlichen Sitztiefen eines Ventilgehäuses in der Schließposition wirkt. Die Verbindung zwischen Handgriff, Gewindeelement und Federelement stellt die Möglichkeit eines Relativhubs zwischen Stößel und Handgriff bereit, die durch den axialen Freiraum zwischen dem freien Ende des zweiten Längsendes des Stößels und der Stufe des Gewindeelements gewährleistet ist.

Die vorstehend beschriebene Erfindung ist selbstverständlich nicht auf die beschriebene und dargestellte Ausführungsform des Ventiloberteils für Sitzventile in Schrägsitzausführung beschränkt. Denkbar ist auch, dass vorstehend beschriebene Ventiloberteil bei einem Sitzventil in Geradsitzausführung zu verwenden, wobei eine Verwendung selbst bei einem Kugelhahn in Betracht kommt. Auch kann das erfindungsgemäße Ventiloberteil nicht nur bei einer Trinkwasserarmatur, sondern für andere Anwendungsgebiete von fluidführenden Leitungen in einer Absperrarmatur verwendet werden. Ferner können an der in den Zeichnungen dargestellten Ausführungsform zahlreiche, dem Fachmann entsprechend der beabsichtigten Anwendung naheliegende Abänderungen vorgenommen werden, ohne dass dadurch der Bereich der Erfindung verlassen wird. Dabei gehört zur Erfindung alles dasjenige, was in der Beschreibung enthalten und/oder in der Zeichnung dargestellt ist, einschließlich dessen, was abweichend von dem konkreten Ausführungsbeispielen für den Fachmann naheliegt.

**Patentansprüche**

1. Ventiloberteil (1) einer Trinkwasserarmatur, mit

   - einem Kopfstück (2),
   - einem hohlzylinderförmigen Handgriff (4), der drehbar und axial fixiert mit dem Kopfstück (2) verbunden ist und einen Aufnahmeraum (5) aufweist,
   - einem Stößel (8), von dem zumindest ein erster Längsabschnitt (7) in einem Führungskanal (6) des Kopfstücks (2) in dessen Längsrichtung verschiebbar geführt ist und von dem ein zweiter Längsabschnitt (9) aus dem Kopfstück (2) in den Aufnahmeraum (5) des hohlzylinderförmigen Handgriffs (4) hervorsteht, und
   - einem in Längsrichtung des Kopfstücks (2) bewegbaren und mit dem Stößel (8) verbundenen Ventilelement (10),

   **dadurch gekennzeichnet,**
   **dass** ein ein Außengewinde (12) aufweisendes Gewindeelement (11) mit dem in den Aufnahmeraum (5) des hohlzylinderförmigen Handgriffs (4) hervorstehenden zweiten Längsabschnitt (9) des Stößels (8) drehfest verbunden ist, wobei das Außengewinde (12) des Gewindeelements (11) derart in ein komplementär und in der Innenwand (14) des Handgriffs (4) ausgebildetes Innengewinde (13) eingreift, dass durch Drehung des Handgriffs (4) das Ventilelement (10) zwischen einer Öffnungsposition (A) und einer Schließposition (B) axial bewegbar ist.

2. Ventiloberteil nach Anspruch 1, **dadurch gekennzeichnet, dass** das Gewindeelement (11) zylinderförmig ausgebildet ist und die Axiallänge des Außengewindes (12) des Gewindeelements (11) höchstens eine Ganghöhe (37) beträgt.

3. Ventiloberteil nach Anspruch 1 oder 2, **dadurch gekennzeichnet, dass** das Außengewinde (12) des Gewindeelements (11) einen Steigungswinkel von höchstens 5° aufweist.

4. Ventiloberteil nach einem der vorhergehenden Ansprüche, **dadurch gekennzeichnet, dass** der Außendurchmesser (52) des Gewindeelements (11) durch eine vorgegebene Steigung (37) und einen vorgegebenen Steigungswinkel seines Außengewindes (12) festgelegt ist.

5. Ventiloberteil nach einem der vorhergehenden Ansprüche, **dadurch gekennzeichnet, dass** das Kopfstück (2) ein Anschlussgewinde (55) zur Verbindung an ein Ventilgehäuse (3) aufweist, wobei der Außendurchmesser (52) des Gewindeelements (11) mindestens so groß ist wie der Außendurchmesser (56) des Anschlussgewindes (55).

6. Ventiloberteil nach einem der vorhergehenden Ansprüche, **dadurch gekennzeichnet, dass** bei einer Umdrehung des hohlzylinderförmigen Handgriffs (4) die die Bewegung des Stößels (8) in Längsrichtung des Kopfstücks (2) kennzeichnende Steigung (37) in einem Bereich zwischen 8mm bis 16mm liegt.

7. Ventiloberteil nach einem der vorhergehenden Ansprüche, **dadurch gekennzeichnet, dass** der Gewindescheitel (50) des Innengewindes (13) des Handgriffs (4) eine Auskehlung (51) aufweist.

8. Ventiloberteil nach einem der vorhergehenden Ansprüche, **dadurch gekennzeichnet, dass** ein Führungselement (15) in eine in dem Stößel (8) ausgeformte Umfangsnut (16) in Bezug zu diesem axial fixiert eingebracht ist und zur Stabilisierung einer Verschiebung des Stößels (8) in Längsrichtung des Kopfstücks (2) an der Innenwand (19) des Führungskanals (6) des Kopfstücks (2) anliegt.

9. Ventiloberteil nach Anspruch 8, **dadurch gekennzeichnet, dass** der Führungskanal (6) einen Anschlagsbereich (17) aufweist, an dem das Führungselement (15) in Öffnungsposition (A) des Ventilelements (10) anliegt.

10. Ventiloberteil nach einem der vorhergehenden Ansprüche, **dadurch gekennzeichnet, dass** an dem in den Aufnahmeraum (5) des Handgriffs (4) hervorstehenden zweiten Längsabschnitt (9) des Stößels (8) ein elastisches Federelement (36) angebracht ist, das eine Bewegung des Gewindeelements (11) in Längsrichtung des Stößels (8) und relativ zum Stößel (8) gegen eine von dem elastischen Federelement (36) ausgeübte Kraft zulässt.

11. Ventiloberteil nach Anspruch 10, **dadurch gekennzeichnet, dass** das elastische Federelement (36) zwischen dem Gewindeelement (11) und einem an dem in den Aufnahmeraum (5) des Handgriffs (4) hervorstehenden zweiten Längsabschnitt (9) des Stößels (8) fixierten Sicherungselement (33) angeordnet ist, wobei in Schließposition (B) des Ventilelements (10) das Gewindeelement (11) in Längsrichtung des Stößels (8) und relativ zum Stößel (8) in Richtung des Sicherungselements (33) bewegt ist und dabei das elastische Federelement (36) komprimiert.

12. Ventiloberteil nach Anspruch 10 oder 11, **dadurch gekennzeichnet, dass** das elastische Federelement (36) zumindest eine Tellerfeder, vorzugsweise eine aus mehreren Tellerfedern bestehende Federsäule, ist.

13. Ventiloberteil nach einem der Ansprüche 10 bis 12, **dadurch gekennzeichnet, dass** das Gewindeelement (11) eine in seinem Zentrum ausgebildete und in seiner Längsrichtung verlaufende, gestuft ausgebildete Durchgangsöffnung (38) zur Aufnahme eines korrespondierend zu der gestuften Durchgangsöffnung (38) ausgebildeten und aus dem Kopfstück (2) in den Aufnahmeraum (5) des hohlzylinderförmigen Handgriffs (4) hervorstehenden freien Endes (35) des zweiten Längsabschnitts (9) des Stößels (8) aufweist, wobei in Öffnungsposition (A) des Ventilelements (10) in der Durchgangsöffnung (38) ein axialer Freiraum (42) zwischen der Stufe (41) der Durchgangsöffnung (38) des Gewindeelements (11) und dem korrespondierenden Abschnitt des Stößels (8) vorhanden ist und in Schließposition (B) des Ventilelements (10) der entsprechende Abschnitt des Stößels (8) an der Stufe (41) der Durchgangsöffnung (41) des Gewindeelements (11) anliegt.

14. Ventiloberteil nach einem der vorhergehenden Ansprüche, **dadurch gekennzeichnet, dass** der in seiner Längsrichtung zumindest abschnittsweise in dem Führungskanal (6) des Kopfstücks (2) verschiebbar geführte erste Längsabschnitt (7) des Stößels (8) im Querschnitt kreisförmig ausgebildet ist und dass der aus dem Kopfstück (2) in den Aufnahmeraum (5) des hohlzylinderförmigen Handgriffs (4) hervorstehende zweite Längsabschnitt (9) des Stößels (8) mit einer Außenkontur versehen ist.

15. Ventiloberteil nach einem der vorhergehenden Ansprüche, **dadurch gekennzeichnet, dass** der Handgriff (4) eine axiale Sichtöffnung (47) aufweist, in die in Öffnungsposition (A) des Ventilelements (10) ein am Stößel (8) angebrachtes Anzeigeelement (45) eintritt.

**Claims**

1. A valve top (1) for a drinking water tap including:

   - a head piece (2),
   - a hollow cylindrical shaped handle (4), which is rotatably and axially fixedly connected to the head piece and has a receiving space (5),
   - a push rod (8), of which at least a first longitudinal section is guided in a guide passage (8) in the head piece (2) so as to be movable in its longitudinal direction and of which a second longitudinal section (9) projects out of the head piece (2) into the receiving space (5) in the hollow cylindrical shaped handle (4), and
   - a valve element (10) which is movable in the longitudinal direction of the head piece (2) and is connected to the push rod (8),
   - **characterised in that** a threaded element (11) with an external screw thread (12) is rotatably fixedly connected to the second longitudinal section (9) of the push rod (8) projecting into the receiving space (5) of the hollow cylindrical shaped handle (4) wherein the external screw thread (12) of the threaded element (11) engages in a complementary internal screw thread (13) formed in the inner wall (14) of the handle (4) such that the valve element (10) is axially movable between an open position (A) and a closed position (B) by rotation of the handle.

2. A valve top as claimed in claim 1, **characterised in that** the threaded element (11) is of cylindrical shape and the axial length of the external screw thread (12) on the threaded element (11) is equal to at most one pitch (37).

3. A valve top as claimed in claim 1 or 2, **characterised in that** the external screw thread (12) on the threaded element (11) has a pitch angle of at most 5°.

4. A valve top as claimed in one of the preceding claims, **characterised in that** the external diameter (52) of the threaded element (11) is determined by a predetermined pitch (37) and a predetermined pitch angle of its external screw thread (12).

5. A valve top as claimed in one of the preceding claims, **characterised in that** the head piece (2) has a connecting screw thread (15) for connecting to a valve housing (3), wherein the external diameter (52) of the threaded element (11) is at least as large as the external diameter (56) of the connecting screw thread (55).

6. A valve top as claimed in one of the preceding claims, **characterised in that** when the hollow cylindrical shaped handle (4) is turned through one rotation, the pitch (37) characterising the movement of the push rod (8) in the longitudinal direction of the head piece (2) lies in a range between 8mm and 16mm.

7. A valve top as claimed in one of the preceding claims, **characterised in that** the screw thread apex (50) of the internal screw thread (13) on the handle (4) has a chamfer (51).

8. A valve top as claimed in one of the preceding claims, **characterised in that** a guide element (15) is inserted into a peripheral groove (16) formed in the push rod (8) so as to be axially fixed with respect to it and engages the inner wall (19) of the guide passage (6) in the head piece (2) in order to stabilise a movement of the push rod in the longitudinal direction of the head piece (2).

9. A valve top as claimed in claim 8, **characterised in that** the guide passage (6) has an abutment region (17), which the guide element (15) engages in the open position (A) of the valve element (10).

10. A valve top as claimed in one of the preceding claims, **characterised in that** attached to the second longitudinal section of the push rod (8) projecting into the receiving space (5) in the handle (4) there is an elastic spring element (36), which permits a movement of the threaded element (11) in the longitudinal direction of the push rod (8) and relative to the push rod (8) against a force exerted by the elastic spring element (36).

11. A valve top as claimed in claim 10, **characterised in that** the elastic spring element (36) is arranged between the threaded element (11) and a securing element (33) fixed to the second longitudinal section (9) of the push rod (8) projecting into the receiving space (5) of the handle (4), wherein in the closed position (B) of the valve element (10) the threaded element (11) is moved in the longitudinal direction of the push rod (8) and relative to the push rod (8) in the direction of the securing element (33) and thereby compresses the elastic spring element (36).

12. A valve top as claimed in claim 10 or 11, **characterised in that** the elastic spring element (36) is at least one plate spring, preferably a spring column consisting of a plurality of plate springs.

13. A valve top as claimed in one of claims 10 to 12, **characterised in that** the threaded element (11) includes a stepped passage (38) formed in its centre and extending in its longitudinal direction for receiving a free end (35) of the second longitudinal section (9) of the push rod (8), which free end is formed corresponding to the stepped passage (38) and projects out of the head piece (2) into the receiving space (5) in the hollow cylindrical shaped handle (4), wherein, in the open position (A) of the valve element (10), an axial free space (42) is present in the passage (38) between the step (41) in the passage (38) in the threaded element (11) and the corresponding section of the push rod (8) and, in the closed position (B) of the valve element (10), the corresponding section of the push rod (8) engages the step (41) in the passage (41) in the threaded element (11).

14. A valve top as claimed in one of the preceding claims, **characterised in that** the first longitudinal section (7) of the push rod (8), which is guided to be movable in its longitudinal direction, at least in sections, in the guide passage (6) in the head piece (2) is of circular shape in cross section and that the second longitudinal section (9) of the push rod (8), which projects out of the head piece (2) into the receiving space (5) in the hollow cylindrical shaped handle (4), is provided with an outer contour.

15. A valve top as claimed in one of the preceding claims, **characterised in that** the handle (4) includes an axial sight opening (47), into which in the open position (A) of the valve element (10), an indicating element (45) attached to the push rod (8) enters.

**Revendications**

1. Partie supérieure de robinet (1) d'un robinet d'eau potable, comprenant

   - une pièce formant tête (2),
   - une poignée (4) en forme de cylindre creux, qui est montée rotative et est solidaire de la pièce formant tête (2) d'une manière fixe axialement et qui comporte un espace de logement (5),
   - une tige (8) dont au moins un premier tronçon longitudinal (7) est guidé de manière à pouvoir glisser dans un passage de guidage (6) de la pièce formant tête (2), suivant la direction longitudinale de celle-ci, et dont un second tronçon longitudinal (9) fait saillie hors de la pièce formant tête (2) dans l'espace de logement (5) de la poignée (4) en forme de cylindre creux, et
   - un élément obturateur (10) déplaçable suivant la direction longitudinale de la pièce formant tête (2) et solidaire de la tige (8),

**caractérisée**

**en ce qu'**un élément fileté (11) comportant un filetage extérieur (12) est solidaire en rotation du second tronçon longitudinal (9) de la tige (8) qui fait saillie dans l'espace de logement (5) de la poignée (4) en forme de cylindre creux, et en ce que le filetage extérieur (12) de l'élément fileté (11) vient en prise dans un filetage intérieur (13) complémentaire, réalisé dans la paroi intérieure (14) de la poignée (4), d'une manière telle que, au moyen d'une rotation de la poignée (4), l'élément obturateur (10) est déplaçable axialement entre une position d'ouverture (A) et une position de fermeture (B).

2. Partie supérieure de robinet suivant la revendication 1, **caractérisée en ce que** l'élément fileté (11) est réalisé avec une forme cylindrique et la longueur axiale du filetage extérieur (12) de l'élément fileté (11) vaut au plus un pas de filetage (37).

3. Partie supérieure de robinet suivant la revendication 1 ou 2, **caractérisée en ce que** le filetage extérieur (12) de l'élément fileté (11) a un angle d'inclinaison d'au plus 5°.

4. Partie supérieure de robinet suivant l'une des revendications précédentes, **caractérisée en ce que** le diamètre extérieur (52) de l'élément fileté (11) est déterminé par une inclinaison préfixée (37) et un angle d'inclinaison préfixé de son filetage extérieur (12).

5. Partie supérieure de robinet suivant l'une des revendications précédentes, **caractérisée en ce que** la pièce formant tête (2) comporte un filetage de fixation (55) destiné à la solidarisation sur un corps de robinet (3), le diamètre extérieur (52) de l'élément fileté (11) étant au moins aussi grand que le diamètre extérieur (56) du filetage de fixation (55).

6. Partie supérieure de robinet suivant l'une des revendications précédentes, **caractérisée en ce que**, dans le cas d'un entraînement en rotation de la poignée (4) en forme de cylindre creux, l'inclinaison (37) caractérisant le déplacement de la tige (8) suivant la direction longitudinale de la pièce formant tête (2) est dans une fourchette comprise entre 8 mm et 16 mm.

7. Partie supérieure de robinet suivant l'une des revendications précédentes, **caractérisée en ce que** le sommet de filetage (50) du filetage intérieur (13) de la poignée (4) comporte une gorge (51).

8. Partie supérieure de robinet suivant l'une des revendications précédentes, **caractérisée en ce qu'**un élément de guidage (15) est monté dans une gorge circonférentielle (16), ménagée dans la tige (8), en étant immobilisé axialement vis-à-vis de celle-ci, et vient en appui sur la paroi intérieure (19) du passage de guidage (6) de la pièce formant tête (2) en vue de la stabilisation d'un glissement de la tige (8) suivant la direction longitudinale de la pièce formant tête (2).

9. Partie supérieure de robinet suivant la revendication 8, **caractérisée en ce que** le passage de guidage (6) comporte une zone de butée (17) sur laquelle l'élément de guidage (15) vient en appui dans la position d'ouverture (A) de l'élément obturateur (10).

10. Partie supérieure de robinet suivant l'une des revendications précédentes, **caractérisée en ce que**, sur le second tronçon longitudinal (9) de la tige (8) qui fait saillie dans l'espace de logement (5) de la poignée (4), il est monté un élément élastique formant ressort (36) qui autorise un déplacement de l'élément fileté (11) suivant la direction longitudinale de la tige (8) et vis-à-vis de la tige (8), à l'encontre d'une force exercée par l'élément élastique formant ressort (36).

11. Partie supérieure de robinet suivant la revendication 10, **caractérisée en ce que** l'élément élastique formant ressort (36) est disposé entre l'élément fileté (11) et un élément de sécurité (33) fixé sur le second tronçon longitudinal (9) de la tige (8) qui fait saillie dans l'espace de logement (5) de la poignée (4) et **en ce que**, dans la position de fermeture (B) de l'élément obturateur (10), l'élément fileté (11) est déplacé suivant la direction longitudinale de la tige (8) et vis-à-vis de la tige (8), en direction de l'élément de sécurité (33), et comprime de ce fait l'élément élastique formant ressort (36).

12. Partie supérieure de robinet suivant la revendication 10 ou 11, **caractérisée en ce que** l'élément élastique formant ressort (36) est au moins une rondelle Belleville, de préférence un empilement de ressorts constitué de plusieurs rondelles Belleville.

13. Partie supérieure de robinet suivant l'une des revendications 10 à 12, **caractérisée en ce que** l'élément fileté (11) comprend une ouverture de passage (38), ménagée en son centre et réalisée d'une manière étagée en s'étendant suivant sa direction longitudinale, destinée à recevoir une extrémité libre (35) du second tronçon longitudinal (9) de la tige (8) qui est réalisée d'une manière correspondant à l'ouverture de passage (38) étagée et qui fait saillie hors de la pièce formant tête (2) dans l'espace de logement (5) de la poignée (4) en forme de cylindre creux, et **en ce que**, dans la position d'ouverture (A) de l'élément obturateur (10), il existe, dans l'ouverture de passage (38), un espace axial libre (42) entre l'épaulement (41) de l'ouverture de passage (38) de l'élément fileté (11) et le tronçon correspondant de la tige (8) alors que, dans la position de fermeture (B) de l'élément obturateur (10), le tronçon approprié de la tige (8) vient en appui sur l'épaulement (41) de l'ouverture de passage (38) de l'élément fileté (11).

14. Partie supérieure de robinet suivant l'une des revendications précédentes, **caractérisée en ce que** le premier tronçon longitudinal (7) de la tige (8), guidé de manière à pouvoir glisser au moins en partie suivant sa direction longitudinale dans le passage de guidage (6) de la pièce formant tête (2), est réalisé circulaire en section transversale et **en ce que** le second tronçon longitudinal (9) de la tige (8) qui fait saillie hors de la pièce formant tête (2) dans l'espace de logement (5) de la poignée (4) en forme de cylindre creux est pourvu d'un profil extérieur.

15. Partie supérieure de robinet suivant l'une des revendications précédentes, **caractérisée en ce que** la poignée (4) comporte un orifice axial de visualisation (47) dans lequel, dans la position d'ouverture (A) de l'élément obturateur (10), pénètre un élément indicateur (45) disposé sur la tige (8).

1

45

42    46

12

11

36

50

51    33

13

14    5

28    15    29

27    4

6    8

2

22    55

10

Fig. 1

Fig. 2

Fig. 3

Fig. 4

Fig. 5

11

12

Fig. 6

39

11

52

12

37

38    41

2

20

31

32

21

27

17

6

19

23

56

55

Fig. 7

C

42    43

11

12

36    33

9

8

15

7

2

54

Fig. 8

A

4    11    45

8    15

55

10

2    36

33

Fig. 9

45    42

3a    3    3a

B

4

11

15

8    55

36

10    2    33

3a

47

Fig. 10

3

3a

**IN DER BESCHREIBUNG AUFGEFÜHRTE DOKUMENTE**

**In der Beschreibung aufgeführte Patentdokumente**

- DE 1803446 A2
- DE 19705982 C1
- DE 10225101 A1